# EUROPÄISCHE PATENTSCHRIFT

(11) **EP 3 074 648 B1**
(45) Veröffentlichungstag und Bekanntmachung des Hinweises auf die Patenterteilung: **10.01.2018**
(21) Anmeldenummer: 14790079.9
(22) Anmeldetag: 28.10.2014
(51) Int. Cl.: F16C 1/22, F16C 1/14

(54) **SEILZUG MIT FÜHRUNGSHÜLLE UND LÄNGENAUSGLEICH, GETRIEBEANORDNUNG MIT EINEM SEILZUG UND VERFAHREN ZUM ZUSAMMENBAU EINES SEILZUGS**
SHEATHED CONTROL CABLE WITH LENGTH COMPENSATION, GEAR ARRANGEMENT WITH A CONTROL CABLE AND METHOD OF ASSEMBLING A CONTROL CABLE
COMMANDE À CÂBLE SOUS GAINE AVEC COMPENSATION DE LA LONGUEUR, DISPOSITION D'UNE BOÎTE DE VITESSES AVEC COMMANDE À CÂBLE ET PROCÉDÉ D'ASSEMBLAGE D'UNE COMMANDE À CÂBLE

(30) Priorität: 28.11.2013 DE 102013224429
(43) Veröffentlichungstag der Anmeldung: 05.10.2016
(73) Patentinhaber: ZF Friedrichshafen AG, 88046 Friedrichshafen (DE)
(72) Erfinder: RAKE, Ludger, 49439 Steinfeld (DE); GIEFER, Andreas, 49448 Lemfoerde (DE); FORTMANN, Wolfgang, 49163 Bohmte (DE)
(86) Internationale Anmeldenummer: PCT/EP2014/073061
(87) Internationale Veröffentlichungsnummer: WO 2015/078644

(56) Entgegenhaltungen:
- DE-A1- 19 730 683
- FR-A1- 2 921 990
- JP-A- 2005 172 203
- JP-A- 2006 017 186
- US-A- 4 887 930
- US-A- 5 156 064
- US-A- 5 394 770
- US-A- 5 598 743
- US-A1- 2010 089 195

## Beschreibung

Die vorliegende Erfindung bezieht sich auf einen Seilzug, ein Getriebesystem und ein Verfahren zum Herstellen eines Seilzugs, beispielsweise für ein Getriebesystem für ein Fahrzeug.

Bei einem Schaltgetriebe erfolgt ein Wechsel von einem Gang auf einen anderen Gang durch Bewegen zumindest eines Steuerhebels, der außen an einem Gehäuse des Schaltgetriebes angeordnet ist. Um den Steuerhebel zu bewegen, wird über einen Seilzug eine Zugkraft von einem Gangwahlhebel auf den Steuerhebel übertragen. Da die Zugkraft von dem Gangwahlhebel zu dem Steuerhebel über eine längere Entfernung übertragen wird, addieren sich Fertigungstoleranzen, die durch eine Längenverstellbarkeit des Seilzugs ausgeglichen werden können.

Die US 2010/0275715 A1 beschreibt eine Schaltkabelkonfektion und einen Verbinder für eine Schaltkabelkonfektion.

Die deutsche Patentoffenlegungsschrift DE 197 30 683 A1 beschreibt einen Seilzug sowie ein Verbindungsstück dafür, das eine vereinfachte Montage zulässt.

Die US Amerikanische Patentschrift US 2010 089 195 A offenbart einen Seilzug mit den Merkmalen des Oberbegriffs des Anspruchs 1 zum Übertragen einer Zug- und/oder Druckkraft auf einem Anlenkpunkt für ein Getriebesystem für ein Fahrzeug, wobei der Seilzug eine Einstelleinheit mit Verzahnungen und Verriegelungselementen aufweist, sowie ein entsprechendes Verfahren zum Herstellen eines Seilzugs. Vor diesem Hintergrund schafft die vorliegende Erfindung einen verbesserten Seilzug gemäß dem unabhängigen Anspruch 1, ein verbessertes Getriebesystem gemäß Anspruch 11 sowie ein verbessertes Verfahren zum Herstellen eines Seilzugs gemäß den Hauptansprüchen. dem unabhängigen Anspruch 12. Vorteilhafte Ausgestaltungen ergeben sich aus den Unteransprüchen und der nachfolgenden Beschreibung.

Um einen Seilzug längenverstellbar zu gestalten, können zwei Bestandteile des Seilzugs, die jeweils mit gegenüberliegenden Enden des Seilzugs verbunden sind, gegeneinander verschiebbar gestaltet werden. Dabei ist eine sichere Verbindung zwischen den verschiebbaren Bestandteilen erforderlich, um die Zugkraft sicher übertragen zu können.

Die beiden Bestandteile können in vordefinierten Schritten einrastbar gestaltet werden. Das Einrasten kann durch ein Verriegelungselement erfolgen, das die Zugkraft von dem einen Bestandteil auf den anderen Bestandteil überträgt. Durch das Einrasten kann die Zugkraft über einen Formschluss übertragen werden. Ein Formschluss ist betriebssicher, da zum Trennen des Formschlusses die eingerasteten Bestandteile in einer Richtung quer zu einer Kraftrichtung bewegt werden müssen, was nur durch Fremdeinwirkung möglich ist.

Es wird ein Seilzug zum Übertragen einer Zugkraft und/oder Druckkraft auf einen Anlenkpunkt vorgestellt, wobei der Seilzug die folgenden Merkmale aufweist:
ein Widerlager zum Einleiten einer, der Zugkraft entgegengerichteten Gegenkraft in eine Hülle des Seilzugs;
eine Zugstange, die in dem Widerlager axial gelagert ist und mit einer Drahtseele des Seilzugs gekoppelt ist, wobei die Zugstange an einem aus dem Widerlager vorstehenden Ende ein Formstück mit einer ersten Komponente einer Verzahnung aufweist;
eine Einstelleinheit zum Anpassen einer Länge des Seilzugs zwischen dem Widerlager und dem Anlenkpunkt, wobei die Einstelleinheit eine Führung für das Formstück aufweist, wobei das Formstück in der Führung axial beweglich und quer dazu geführt angeordnet ist; und
ein Verriegelungselement zum Fixieren des Formstücks in der Einstelleinheit, wobei das Verriegelungselement in einer quer zu der Führung ausgerichteten Aussparung in der Einstelleinheit angeordnet ist und zwischen einer Verriegelungsposition und einer Einstellposition beweglich ist, wobei das Verriegelungselement eine zweite Komponente der Verzahnung aufweist, die dazu ausgebildet ist, in der Verriegelungsposition in die erste Komponente formschlüssig einzugreifen und die axiale Bewegung des Formstücks in der Führung zu unterbinden.

Der Seilzug kann beispielsweise für ein Getriebesystem für ein Fahrzeug eingesetzt werden. Unter einem Seilzug kann ein Bowdenzug verstanden werden. Ein Anlenkpunkt kann ein Kraftangriffspunkt für die Zugkraft sein. Eine Hülle kann ein druckstabiler Schlauch sein, in dem die Drahtseele des Seilzugs angeordnet ist. Die Drahtseele kann zugstabil sein. Ein Widerlager kann ein Ende der Hülle sein. Die Zugstange kann in Verlängerung der Hülle und des Seils ausgerichtet sein. Die Zugstange kann entlang ihrer Haupterstreckungsachse beweglich gelagert sein. Ein Formstück kann ein, durch Umformen eines Teils der Zugstange hergestellter Bestandteil der Zugstange sein. Die erste Komponente kann beispielsweise in das Formstück geprägt oder geschnitten sein. Die Einstelleinheit kann direkt mit dem Anlenkpunkt verbunden sein. Das Formstück kann innerhalb eines Einstellbereichs in der Führung der Einstelleinheit beweglich sein. Das Verriegelungselement kann quer zu der Zugkraft ausgerichtete Kontaktflächen zu der Einstelleinheit aufweisen. Die zweite Komponente der Verzahnung kann Kontaktflächen zu dem Formstück bereitstellen, die nur in der Verriegelungsposition im Eingriff sind.

Die Verzahnung kann vorzugsweise eine Zahnteilung kleiner als einen Millimeter, weiter bevorzugt kleiner als einen dreiviertel Millimeter oder weiter bevorzugt kleiner als einen halben Millimeter aufweisen. Durch eine vorteilhafte Materialpaarung in der Verzahnung kann die Zugkraft über so kleine Zähne übertragen werden. Dadurch kann die Länge des Seilzugs besonders genau eingestellt werden. Erfindungsgemäß weist das Verriegelungselement einen Einsatz auf, der aus einem Material besteht, das höher belastbar ist als das Material, aus dem das übrige Verriegelungselement ausgeformt ist. Ein höher belastbares Material kann eine höhere Zugfestigkeit, Druckfestigkeit und/oder Scherfestigkeit aufweisen, als ein niedriger belastbares Material. Beispielsweise kann das Verriegelungselement einen Verriegelungseinsatz aus einem Material aufweisen, das eine größere Zugfestigkeit, Druckfestigkeit und/oder Scherfestigkeit als ein Material des Verriegelungsgrundkörpers aufweist. Dabei ist nach der Erfindung an dem Einsatz zumindest ein Teil der zweiten Komponente der Verzahnung ausgebildet. Bei einem höher belastbaren Material kann über eine kleine Fläche eine große Kraft übertragen werden, ohne Materialschäden zu verursachen. Durch ein höher belastbares Material kann das Verriegelungselement kompakt ausgeführt werden.

Beispielsweise kann das Material des Einsatzes ein metallischer Werkstoff und das Material des Verriegelungselements ein Kunststoffwerkstoff sein. Ein metallischer Werkstoff kann eine Materialpaarung mit dem Formstück ergeben, die belastbarer ist, als eine Materialpaarung zwischen dem Kunststoffwerkstoff und dem Formstück.

Das Formstück kann einen viereckigen Querschnitt aufweisen, wobei die erste Komponente der Verzahnung auf zwei gegenüberliegenden Seitenflächen des Formstücks angeordnet sein kann. Damit kann die erste Komponente in einer Bewegungsrichtung des Verriegelungselements ausgerichtet sein. So können die Zähne des Verriegelungselements in die Zähne des Formstücks eingleiten.

Das Verriegelungselement kann eine U-Form aufweisen, wobei die zweite Komponente der Verzahnung auf den Innenseiten der Schenkel des U angeordnet ist. Durch die U-Form kann das Formstück auf zumindest zwei Seiten umschlossen werden. Durch die U-Form können seitliche Auswurfkräfte, die bei der Zugkraft in der Verzahnung resultieren in dem U abgestützt werden, um ein Durchrutschen der Verzahnung zu verhindern.

Das Formstück kann an einem, der Zugstange gegenüberliegenden Ende eine Verdickung aufweisen, welche die erste Komponente der Verzahnung überragt. Dabei kann die Verdickung an Seitenwänden der Führung anliegen und die erste Komponente einen Abstand zu den Seitenwänden aufweisen. Die Verdickung kann als Anschlag ausgebildet sein, um eine Verlustsicherung bereitzustellen.

Das Verriegelungselement kann zumindest eine Rastnase aufweisen, die dazu ausgebildet ist, in der Einstellposition an einer ersten Körperkante der Einstelleinheit formschlüssig einzugreifen, um das Verriegelungselement gegen ein Entfernen aus der Aussparung zu sichern. Die Rastnase kann dazu ausgebildet sein, in der Verriegelungsposition an einer zweiten Körperkante der Einstelleinheit formschlüssig einzugreifen, um das Verriegelungselement gegen ein Entfernen aus der Verriegelungsposition zu sichern. Die Rastnase kann eine Schräge aufweisen, durch die die Rastnase beim Bewegen in die Verriegelungsposition in die Aussparung gedrückt wird. Durch ein Einrasten in der Einstellposition und der Verriegelungsposition können Querkräfte, die das Verriegelungselement aus der Verriegelungsposition in die Einstellposition oder von der Einstellposition aus der Aussparung bewegen, könnten abgefangen werden. Durch die Schräge wird ein werkzeugloses Bewegen des Verriegelungselements in die Einstellposition und aus der Einstellposition in die Verriegelungsposition ermöglicht.

Das Verriegelungselement kann eine Gleitfläche für die erste Komponente der Verzahnung aufweisen. Dabei kann die Gleitfläche in der Einstellposition benachbart zu der ersten Komponente angeordnet sein und in der Verriegelungsposition versetzt zu der Verzahnung angeordnet sein. Eine Gleitfläche kann in einer Ebene mit Zahnköpfen der ersten Komponente ausgerichtet sein. Die Gleitfläche kann ein Verkanten des Formstücks in der Führung verhindern und eine definierte axiale Bewegung des Formstücks in der Führung ermöglichen. Die Gleitfläche kann im einstellbaren Zustand als Anschlag für die Verdickung des Formstücks dienen, um den Einstellbereich zu definieren und ein ungewolltes Trennen der Einstelleinheit und der Zugstange zu verhindern.

Die Verzahnung kann mit Einführschrägen ausgebildet sein. Durch zumindest eine Einführschräge kann ein Blockieren der ersten Komponente und der zweiten Komponente beim Bewegen des Verriegelungselements von der Einstellposition in die Verriegelungsposition verhindert werden.

Es wird weiterhin ein Getriebesystem mit mit einem Getriebe mit einem Anlenkpunkt und mit einem Wählhebel vorgestellt. Das Getriebesystem weist ferner einen Seilzug gemäß dem hier vorgestellten Ansatz, wobei der Seilzug den Wählhebel mit dem Anlenkpunkt verbindet und dazu ausgebildet ist, eine Zugkraft von dem Wählhebel auf den Anlenkpunkt zu übertragen, wobei zwei an entgegengesetzten Enden der Hülle angeordnete Widerlager ausgebildet sind, um die Gegenkraft zur Zugkraft abstützen.

Weiterhin wird ein Verfahren zum Herstellen eines Seilzugs vorgestellt, wobei das Verfahren die folgenden Schritte umfasst:
Bereitstellen einer mit einer Drahtseele des Seilzugs gekoppelten Zugstange mit einem Formstück, das eine erste Komponente einer Verzahnung aufweist, wobei die Zugstange in einem mit einer Hülle des Seilzugs verbundenen Widerlager axial gelagert ist;
Bereitstellen einer Einstelleinheit zum Anpassen einer Länge des Seilzugs zwischen dem Widerlager und dem Anlenkpunkt, wobei die Einstelleinheit eine Führung zum Aufnehmen des Formstücks und eine Aussparung zum Aufnehmen eines Verriegelungselements aufweist;
Bereitstellen des Verriegelungselements zum Fixieren des Formstücks in der Einstelleinheit, wobei das Verriegelungselement eine zweite Komponente der Verzahnung aufweist, die dazu ausgebildet ist, in die erste Komponente formschlüssig einzugreifen und die axiale Bewegung des Formstücks in der Führung zu unterbinden, und wobei das Verriegelungselement einen Einsatz aus einem Material aufweist, das eine höhere mechanische Belastbarkeit als ein Material des Verriegelungselements aufweist, wobei an dem Einsatz zumindest ein Teil der zweiten Komponente der Verzahnung ausgebildet ist; Anordnen des Formstücks in der Führung der Einstelleinheit; und
Einpressen des Verriegelungselements in die Aussparung, bis das Verriegelungselement in einer Einstellposition angeordnet ist, in der das Formstück verlustsicher mit der Einstelleinrichtung verbunden ist.

Die Erfindung wird anhand der beigefügten Zeichnungen beispielhaft näher erläutert. Es zeigen:
- Fig. 1: eine Darstellung eines Seilzugs mit einer stufenlosen Längeneinstelleinrichtung;
- Fig. 2: eine Darstellung eines Seilzugs mit einer Zugstange für eine stufenlose Längeneinstelleinrichtung;
- Fig. 3: eine Darstellung eines Seilzugs mit formschlüssiger Kraftübertragung gemäß einem Ausführungsbeispiel der vorliegenden Erfindung;
- Fig. 4: eine Darstellung eines Seilzugs mit einem Formstück für eine formschlüssige Kraftübertragung gemäß einem Ausführungsbeispiel der vorliegenden Erfindung;
- Fig. 5: eine Darstellung eines Seilzugs in einstellbarem Zustand gemäß einem Ausführungsbeispiel der vorliegenden Erfindung;
- Fig. 6: eine Detaildarstellung eines Seilzugs in verriegeltem Zustand gemäß einem Ausführungsbeispiel der vorliegenden Erfindung;
- Fig. 7: eine Seitenansicht eines Seilzugs in einstellbarem Zustand gemäß einem Ausführungsbeispiel der vorliegenden Erfindung;
- Fig. 8: eine Seitenansicht eines Seilzugs in verriegeltem Zustand gemäß einem Ausführungsbeispiel der vorliegenden Erfindung;
- Fig. 9: eine Querschnittdarstellung eines Seilzugs in einstellbarem Zustand gemäß einem Ausführungsbeispiel der vorliegenden Erfindung;
- Fig. 10: eine Längsschnittdarstellung eines Seilzugs in einstellbarem Zustand gemäß einem Ausführungsbeispiel der vorliegenden Erfindung;
- Fig. 11: eine Querschnittdarstellung eines Seilzugs in verriegeltem Zustand gemäß einem Ausführungsbeispiel der vorliegenden Erfindung;
- Fig. 12: eine Längsschnittdarstellung eines Seilzugs in verriegeltem Zustand gemäß einem Ausführungsbeispiel der vorliegenden Erfindung;
- Fig. 13: eine Darstellung eines Verriegelungselements gemäß einem Ausführungsbeispiel der vorliegenden Erfindung;
- Fig. 14: eine Ansicht eines Verriegelungselements gemäß einem Ausführungsbeispiel der vorliegenden Erfindung;
- Fig. 15: eine Draufsicht auf ein Verriegelungselement gemäß einem Ausführungsbeispiel der vorliegenden Erfindung;
- Fig. 16: eine Detaildarstellung einer formschlüssigen Verbindung gemäß einem Ausführungsbeispiel der vorliegenden Erfindung;
- Fig. 17A bis 17B: eine perspektivische Darstellung eines Einsatzes für ein Verriegelungselement gemäß einem Ausführungsbeispiel der vorliegenden Erfindung;
- Fig. 18: ein Blockschaltbild eines Getriebesystems gemäß einem Ausführungsbeispiel der vorliegenden Erfindung; und
- Fig. 19: ein Ablaufdiagramm eines Verfahrens zum Herstellen eines Seilzugs gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

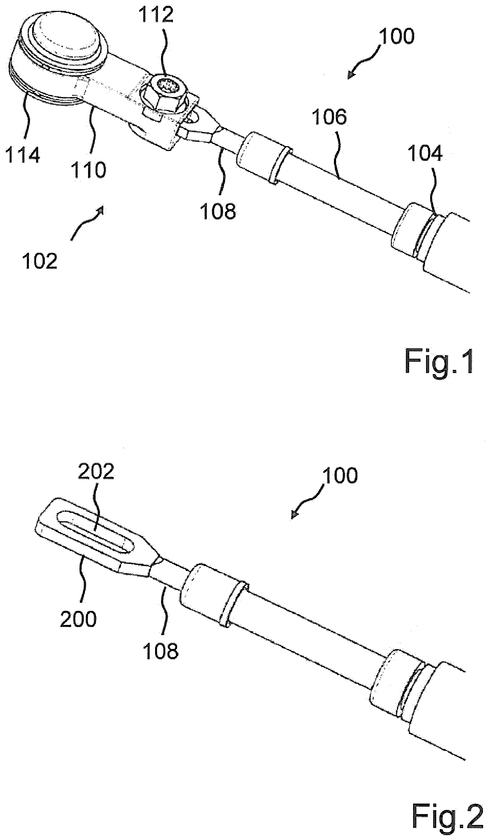

Fig. 1 zeigt eine Darstellung eines Seilzugs 100 mit einer stufenlosen Längeneinstelleinrichtung 102. Der Seilzug 100 ist in einer räumlichen Darstellung gezeigt. Der Seilzug 100 weist eine hier nicht dargestellte Drahtseele zum Übertragen einer Zugkraft auf. Die Drahtseele ist in einer ebenfalls nicht dargestellten flexiblen Hülle geführt. Die Hülle ist schlauchförmig. Der Seilzug 100 kann auch als Bowdenzug bezeichnet werden. Die Hülle endet an beiden Enden in einem Widerlager 104. Das Widerlager 104 wird zum Übertragen einer, der Zugkraft entgegengesetzten Gegenkraft an einem Fixpunkt abgestützt. Damit ist die Hülle einer Druckkraft ausgesetzt, die jeweils entgegengesetzt zu der Zugkraft ausgerichtet ist. Das Widerlager 104 weist eine starre Hülse 106 auf, die als lineares Gleitlager für eine Zugstange 108 ausgebildet ist. Die Hülse 106 ist in Verlängerung der Hülle ausgerichtet, um einen tangentialen Anschluss des Seils an die Zugstange 108 zu gewährleisten. Die Zugstange 108 ist an einem freiliegenden Ende abgeflacht und weist in dem abgeflachten Teil ein axial ausgerichtetes Langloch auf. Der abgeflachte Teil ist in ein Endstück 110 eingesteckt und unter Verwendung einer Schraubverbindung 112 in dem Endstück kraftschlüssig geklemmt. Die Schraubverbindung ist hier durch eine Sechskantschraube und eine gegen Verdrehen gesicherte Mutter ausgeführt. Das Endstück 110 weist eine Kugelbuchse 114 auf, die dazu ausgebildet ist, die Zugkraft auf einen Kugelzapfen als Anlenkpunkt zu übertragen.

Fig. 2 zeigt eine Darstellung eines Seilzugs 100 mit einer Zugstange 108 für eine stufenlose Längeneinstelleinrichtung. Der Seilzug 100 entspricht im Wesentlichen dem Seilzug in Fig. 1. Im Gegensatz dazu ist hier die Zugstange 108 mit dem abgeflachten Ende 200 ohne angebaute Teile dargestellt. Das Langloch 202 ist mittig in dem Ende 200 angeordnet.

Bei dem in den Figuren 1 und 2 dargestellten Seilzug 100 erfolgt die Seilzugeinstellung stufenlos mittels einer Schraubverbindung.

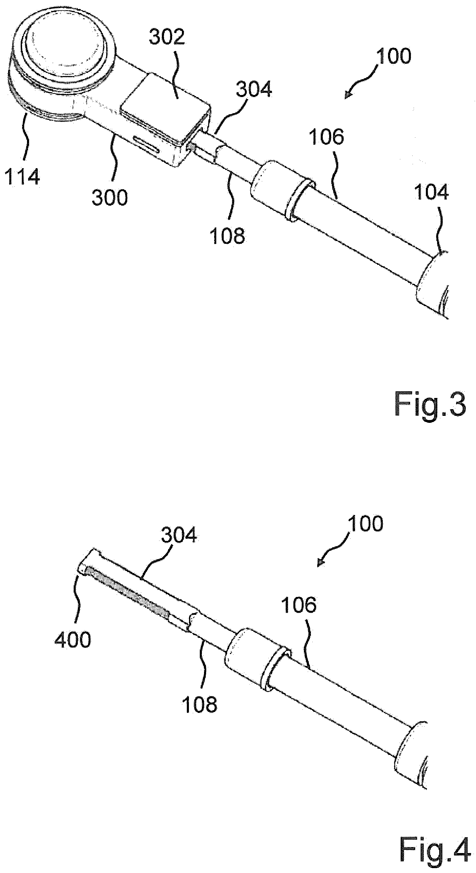

Fig. 3 zeigt eine Darstellung eines Seilzugs 100 mit formschlüssiger Kraftübertragung gemäß einem Ausführungsbeispiel der vorliegenden Erfindung. Der Seilzug 100 ist in einer räumlichen Darstellung gezeigt. Der Seilzug 100 ist dazu ausgebildet, eine Zugkraft auf einen Anlenkpunkt zu übertragen. Der Seilzug 100 weist ein Widerlager 104, eine Zugstange 108, eine Einstelleinheit 300 und ein Verriegelungselement 302 auf. Das Widerlager 104 ist dazu ausgebildet, eine, der Zugkraft entgegengerichtete Gegenkraft in eine Hülle des Seilzugs 100 einzuleiten. Die Zugstange 108 ist in dem Widerlager 104 axial gelagert und mit einer Drahtseele des Seilzugs 100 gekoppelt. Die Zugstange 108 weist an einem aus dem Widerlager 104 vorstehenden Ende ein Formstück 304 mit einer ersten Komponente einer Verzahnung auf. Die Einstelleinheit 300 ist dazu ausgebildet, eine Länge des Seilzugs 100 zwischen dem Widerlager 104 und dem Anlenkpunkt anzupassen. Die Einstelleinheit 300 weist eine Führung für das Formstück 304 auf. Das Formstück 304 ist in der Führung axial beweglich und quer dazu geführt angeordnet. Das Verriegelungselement 302 ist dazu ausgebildet, das Formstück 304 in der Einstelleinheit 300 zu fixieren. Das Verriegelungselement 302 ist in einer quer zu der Führung ausgerichteten Aussparung in der Einstelleinheit 300 angeordnet. Das Verriegelungselement 302 ist zwischen einer Verriegelungsposition und einer Einstellposition beweglich. Das Verriegelungselement 302 weist eine zweite Komponente der Verzahnung auf. Die zweite Komponente ist dazu ausgebildet, in der Verriegelungsposition in die erste Komponente formschlüssig einzugreifen und die axiale Bewegung des Formstücks 304 in der Führung zu unterbinden. Die zweite Komponente ist spiegelbildlich zu der ersten Komponente ausgebildet. Das Verriegelungselement 302 ist hier in der Verriegelungsposition gezeigt.

In einem Ausführungsbeispiel zeigt Fig. 3 eine Seilzugeinstellung 300 mit 0,5 mm Rastung. Durch den hier vorgestellten Ansatz können Packagevorteile erreicht werden. Ebenso kann der Seilzug 100 mit dem hier vorgestellten Ansatz leicht eingestellt werden. Durch die formschlüssige Verbindung des Arretierens mittels Clipsen kann eine Sicherheit der Verbindung trotz Einstellbarkeit erhöht werden. Durch die Rastung kleiner 0,5 mm kann eine richtige Systemeinstellung "Getriebe/Schaltung" gewährleistet werden. Weiterhin kann die formschlüssige Verbindung hohe Betätigungskräfte von größer 1000N übertragen.

In einem Ausführungsbeispiel ist zwischen Endstück 300 und Gleitstück 106 eine Druckfeder angeordnet, um das Spiel direkt bei der Montage zu eliminieren.

Fig. 4 zeigt eine Darstellung eines Seilzugs 100 mit einem Formstück 304 für eine formschlüssige Kraftübertragung gemäß einem Ausführungsbeispiel der vorliegenden Erfindung. Das Formstück 304 weist einen viereckigen Querschnitt auf. Die erste Komponente der Verzahnung ist auf zwei gegenüberliegenden Seitenflächen des Formstücks 304 angeordnet. Die Verzahnung weist eine Zahnteilung kleiner einem halben Millimeter auf. Bisher waren Verzahnungen mit einer Zahnteilung von einem Millimeter oder größer ausführbar. Der hier vorgestellte Ansatz ermöglicht nun Verzahnungen mit einer kleineren Zahnteilung, wobei die Zahnteilung < 1 Millimeter, < 0,75 Millimeter oder, wie dargestellt, < 0,5 Millimeter sein kann. Die Verzahnung weist langgestreckte Zähne auf, die quer zu einer Achse der Zugstange 108 ausgerichtet sind. Das Formstück 304 weist an einem, der Zugstange 108 gegenüberliegenden Ende eine Verdickung 400 auf, welche die erste Komponente der Verzahnung überragt.

Mit anderen Worten zeigen die Figuren 3 und 4 ein Schnelleinstellsystem für einen Seilzug 100, das eine Verliersicherung für die Einstelleinheit im Anlieferungszustand aufweist. Das Schnelleinstellsystem weist eine Kugelbuchse 114, ein Endstück 300, einen Gleitbolzen 108, eine Schnelleinstellung 302, und Seilzugwiderlager 104 auf. Die Kugelbuchse 114 ist mit einem Kugelzapfen verbindbar. Die Schnelleinstellung 302 ist deaktivierbar und aktivierbar, sowie in beiden Zuständen eingerastet.

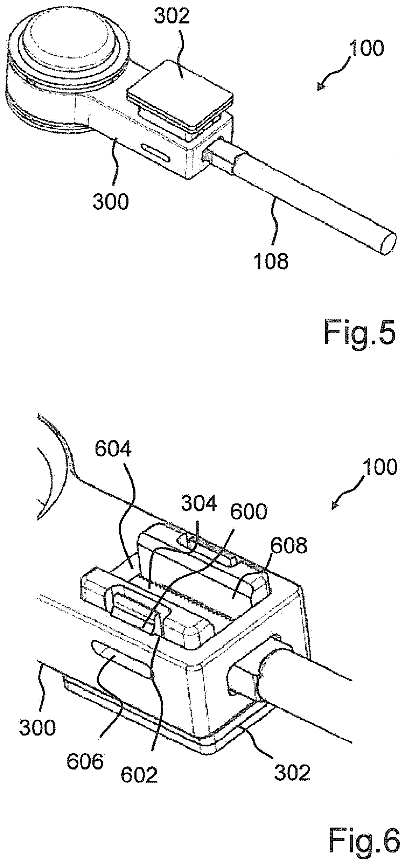

Fig. 5 zeigt eine Darstellung eines Seilzugs 100 in einstellbarem Zustand gemäß einem Ausführungsbeispiel der vorliegenden Erfindung. Der Seilzug entspricht im Wesentlichen dem in Fig. 3 dargestellten Seilzug. Das Widerlager und die Hülse sind hier nicht dargestellt. Das Verriegelungselement 302 ist hier in der Einstellposition dargestellt. Das Verriegelungselement 302 ist in der Aussparung der Einstelleinheit 300 angeordnet und in der Einstellposition eingerastet. Die Einstellposition entspricht einer Zwischenposition des Verriegelungselements 302, während die Verriegelungsposition einer Endlage des Verriegelungselements 302 in der Aussparung entspricht.

Fig. 6 zeigt eine Detaildarstellung eines Seilzugs 100 in verriegeltem Zustand gemäß einem Ausführungsbeispiel der vorliegenden Erfindung. Der Seilzug 100 entspricht im Wesentlichen dem in Fig. 3 dargestellten Seilzug. Der Seilzug 100 ist im Vergleich zu Fig. 3 hier von einer entgegengesetzten Seite dargestellt. Das Verriegelungselement 302 ist im Wesentlichen U-förmig ausgebildet. Dabei weist das Verriegelungselement 302 zwei gleichartige Schenkel auf, zwischen denen das Formstück 304 angeordnet ist. Die Schenkel weisen auf ihren Innenseiten je einen Teil der ersten Komponente der Verzahnung auf. Im verriegelten Zustand greifen die Komponenten der Verzahnung von Formstück 304 und Verriegelungselement 302 ineinander und bilden die formschlüssige Verbindung aus. Das Verriegelungselement 302 weist zumindest eine Rastnase 600 auf. Die Rastnase ist auf einer, von dem Formstück 304 abgewandten Seite der Schenkel angeordnet. Die Rastnase 600 ist dazu ausgebildet, in der Verriegelungsposition an einer Körperkante 602 der Einstelleinheit 300 formschlüssig einzugreifen, um das Verriegelungselement 302 gegen ein Entfernen aus der Verriegelungsposition zu sichern. Durch ein Zurückdrücken der Rastnasen 600 kann das Verriegelungselement 302 entriegelt werden und aus der Verriegelungsposition in die Einstellposition verschoben werden. Dann kann die Länge des Seilzugs 100 nachjustiert werden.

Im dargestellten Ausführungsbeispiel weist das Verriegelungselement 302 zwei gegenüberliegende Rastnasen 600 auf, die an zwei gegenüberliegenden Körperkanten 602 eingerastet sind. Die Körperkanten werden hier durch Kanten der Aussparung 604 ausgebildet.

Die Einstelleinheit 300 weist in den Seitenwänden Taschen 606 auf. Die Taschen 606 stellen je eine zweite Körperkante zum Einrasten der Rastnasen 600 in der Einstellposition auf. Die Taschen 606 sind hier als Durchbrüche ausgebildet.

In einem nicht dargestellten Ausführungsbeispiel werden die Körperkanten für die Einrastposition 602 durch weitere Taschen in Seitenwänden der Aussparung 604 ausgebildet.

Das Verriegelungselement 302 weist zumindest eine Gleitfläche 608 für die erste Komponente der Verzahnung auf. Die Gleitfläche 608 ist in der Einstellposition benachbart zu der ersten Komponente angeordnet. In der Verriegelungsposition ist die Gleitfläche 608 wie hier dargestellt versetzt zu der Verzahnung angeordnet.

Im dargestellten Ausführungsbeispiel weist das Verriegelungselement 302 zwei gegenüberliegende Gleitflächen 608 auf, die einander zugewandt auf den Innenseiten der Schenkel angeordnet sind. Die Gleitflächen 608 und die zweite Komponente der Verzahnung sind in einer Ebene angeordnet, wobei die Bewegungsrichtung des Verriegelungselements 302 zwischen dem verriegelten Zustand und dem einstellbaren Zustand in der Ebene liegt.

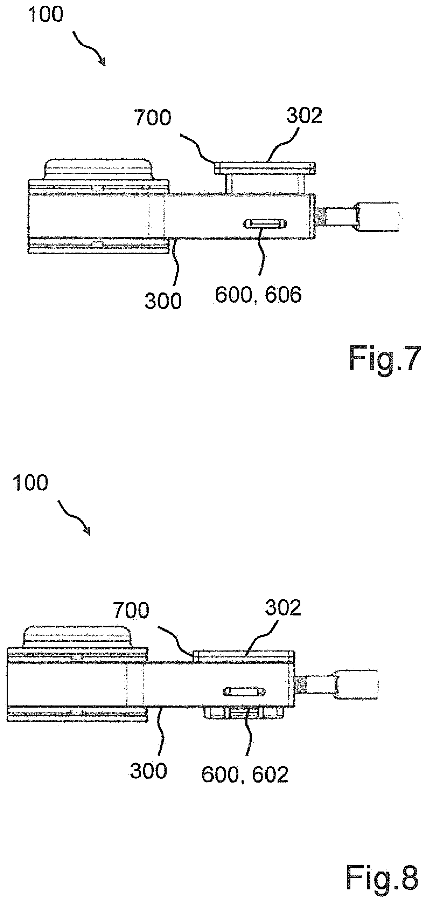

Fig. 7 zeigt eine Seitenansicht eines Seilzugs 100 in einstellbarem Zustand gemäß einem Ausführungsbeispiel der vorliegenden Erfindung. Der Seilzug 100 entspricht im Wesentlichen dem in Fig. 5 dargestellten Seilzug. Das Verriegelungselement 302 ist in der Einstellposition angeordnet, in der das Formstück 304 axial in der Führung beweglich ist. Die Rastnase 600 ist dazu ausgebildet, in der Einstellposition an einer Körperkante 606 der Einstelleinheit 300 formschlüssig einzugreifen, um das Verriegelungselement 302 gegen ein Entfernen aus der Aussparung zu sichern.
Durch den Durchbruch 606 ist erkennbar, wie die Rastnase 600 an der zweiten Körperkante 606 eingerastet ist. Dadurch ist das Verriegelungselement 302 verlustgeschützt. Das Verriegelungselement 302 weist einen umlaufenden Flansch 700 auf, der in der Einstellposition beabstandet zu der Einstelleinheit 300 ist.

Mit anderen Worten ist in Fig. 7 im Anlieferungszustand die Vorraste geclipst.

Fig. 8 zeigt eine Seitenansicht eines Seilzugs 100 in verriegeltem Zustand gemäß einem Ausführungsbeispiel der vorliegenden Erfindung. Der Seilzug 100 entspricht dem Seilzug in Fig. 7. Hier ist das Verriegelungselement 302 in der Verriegelungsposition angeordnet, in der das Formstück 304 axial fixiert ist. Die Rastnase 600 ist an der Körperkante 602 eingerastet. Der Flansch 700 liegt jetzt auf der Einstelleinheit 300 auf.

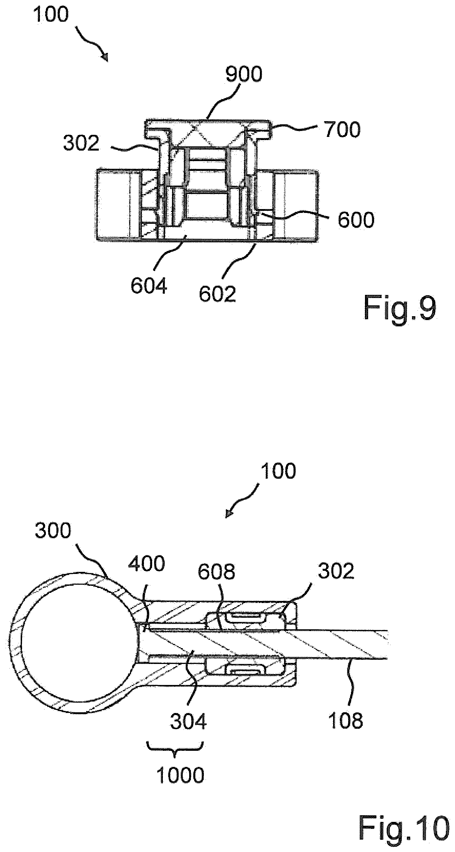

Fig. 9 zeigt eine Querschnittdarstellung eines Seilzugs 100 in einstellbarem Zustand gemäß einem Ausführungsbeispiel der vorliegenden Erfindung. Der Querschnitt verläuft senkrecht durch das Verriegelungselement 302 in der Einstellposition. Damit entspricht der Seilzug 100 im Wesentlichen dem Seilzug in Fig. 7. Die Rastnase 600 weist eine Schräge auf, durch welche die Rastnase 600 beim Bewegen von der Einstellposition in die Verriegelungsposition in die Aussparung 604 gedrückt wird. Beim Erreichen der Verriegelungsposition schnappt die Rastnase wieder über die Körperkante 602. Zusätzlich ist hier gezeigt, dass das Verriegelungselement 302 einen Einsatz 900 aus einem höher als ein Material des Verriegelungselements 302 belastbaren Material aufweist, wobei an dem Einsatz 900 zumindest ein Teil der zweiten Komponente der Verzahnung ausgebildet ist. Der Einsatz 900 weist einen metallischen Werkstoff auf. Das Verriegelungselement 302 weist einen Kunststoffwerkstoff auf. Der Flansch 700 des Verriegelungselements 302 ist zweischichtig ausgeführt. Der Einsatz 900 bildet eine metallene Deckschicht aus, die auf einer unteren Schicht aus Kunststoff angeordnet ist. Der Einsatz 900 ist in einer zentralen Aussparung des Verriegelungselements 302 angeordnet. Der Einsatz 900 weist wie das Verriegelungselement 302 mit Ausnahme des Flanschs 700 eine U-Form auf. An den Innenseiten der Schenkel des Einsatzes 900 ist die zweite Komponente der Verzahnung angeordnet. Die Verzahnung ist mit Einführschrägen ausgebildet.

In einem Ausführungsbeispiel werden die Anforderungen nach der formschlüssigen Verbindung durch das Arretieren mittels Clipsen, der Einstellbarkeit bei maximal 0,5 mm Rastung und den Übertragungskräften der formschlüssigen Verbindung von größer 1000N durch einen metallischen Einleger 900 im Verriegelungselement 300 erfüllt. Hierbei weist der metallische Einleger 900 Raststufen von kleiner 0,5 mm auf. Damit das Verriegelungselement 302 auch in Zwischenpositionen sauber arretiert werden kann, sind die Zähne der Rastung mit einer Einführfase ausgeführt.

In einem Ausführungsbeispiel ist der metallische Einleger 900 aus Sintermetall ausgeführt.

In einem Ausführungsbeispiel ist der metallische Einleger 900 durch Pulverspritzgießen, Metal Injection Molding MIM ausgeführt.

In einem Ausführungsbeispiel ist, bei reduzierten Anforderungen hinsichtlich der Übertragungskraft im Seilzug, der Einleger 900 des Verriegelungselements 302 in hochfesten Kunststoff ausgeführt.

Mit anderen Worten zeigt Fig. 9 eine Schnelleinstellung 302 mit zwei Komponenten 900. Der Einleger kann auch als Rastelement bezeichnet werden.

Fig. 10 zeigt eine Längsschnittdarstellung eines Seilzugs 100 in einstellbarem Zustand gemäß einem Ausführungsbeispiel der vorliegenden Erfindung. Der Längsschnitt verläuft durch das Verriegelungselement 302 in der Einstellposition und senkrecht durch die Einstelleinheit 300. Damit entspricht der Seilzug 100 im Wesentlichen dem Seilzug in Fig. 7. Das Formstück 304 weist wie in Fig. 4 die Verdickung 400 am von der Zugstange 108 abgewandten Ende auf. Die Verdickung 400 liegt an Seitenwänden der Führung an. Damit weist die erste Komponente der Verzahnung einen Abstand zu den Seitenwänden auf. Die Gleitflächen 608 des Verriegelungselements 302 liegen in der Einstellposition an der ersten Komponente der Verzahnung an und ermöglichen so ein geführtes axiales Verstellen der Zugstange 108 innerhalb der Einstelleinheit 300. Die Verdickung 400 ist breiter als der Abstand zwischen den Gleitflächen 608. Dadurch stößt die Verdickung 400 am Ende des Einstellbereichs an dem Verriegelungselement 302 an und verhindert ein Herausfallen der Zugstange 108 aus der Führung in der Einstelleinheit 300. Die Verdickung 400 wirkt als Verlustsicherung bzw. Verliersicherung. Innerhalb eines Einstellbereichs 1000 kann die Zugstange 108 mit dem Formstück 304 in der Führung axial bewegt werden.

In einem Ausführungsbeispiel ist der Einstellbereich 1000 auf zehn Millimeter reduziert.

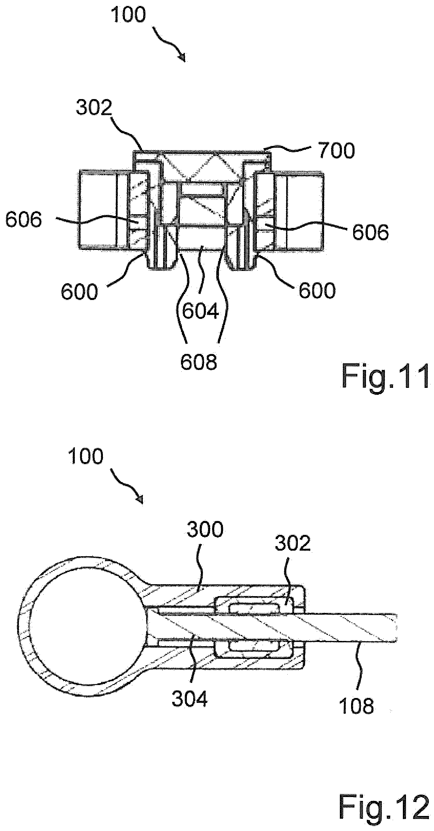

Fig. 11 zeigt eine Querschnittdarstellung eines Seilzugs 100 in verriegeltem Zustand gemäß einem Ausführungsbeispiel der vorliegenden Erfindung. Der Querschnitt verläuft wie in Fig. 9 senkrecht durch das Verriegelungselement 302. Damit entspricht der Seilzug 100 im Wesentlichen dem Seilzug in Fig. 8. Das Verriegelungselement 302 ist hier in der Verriegelungsposition gezeigt. Damit sind die Gleitflächen 608 parallel zu der ersten Komponente der Verzahnung verschoben und die Rastnasen 600 umgreifen die Kante der Aussparung 604. Im verriegelten Zustand greift die zweite Komponente der Verzahnung in die erste Komponente formschlüssig ein.

Beim Bewegen des Verriegelungselements 300 von der Einstellposition in die Verriegelungsposition werden die federnden Rastnasen durch die Schräge an einer Kante der Taschen 606 in die Aussparung 604 gedrückt, gleiten an den Seitenflächen der Aussparung entlang und schnappen an der Kante der Aussparung wieder zurück.

Fig. 12 zeigt eine Längsschnittdarstellung eines Seilzugs 100 in verriegeltem Zustand gemäß einem Ausführungsbeispiel der vorliegenden Erfindung. Der Längsschnitt verläuft durch das Verriegelungselement 302 in der Verriegelungsposition und senkrecht durch die Einstelleinheit 300. Damit entspricht der Seilzug 100 im Wesentlichen dem Seilzug in Fig. 10. Wie in Fig. 11 greift hier die an dem Formstück 304 angeordnete erste Komponente der Verzahnung formschlüssig in die an dem Verriegelungselement 302 angeordnete zweite Komponente der Verzahnung ein. Dadurch ist die axiale Beweglichkeit des Formstücks 304 in der Führung unterbunden.

Im dargestellten Ausführungsbeispiel ist die Zugstange 108 mit dem Formstück 304 maximal weit in die Führung eingeschoben und fixiert.

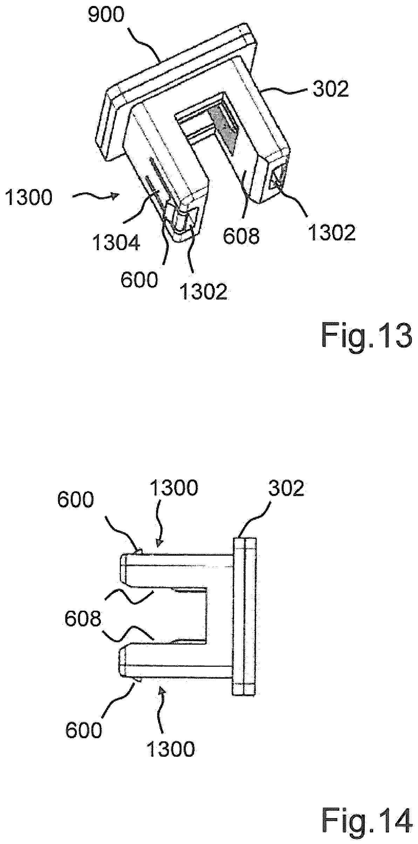

Fig. 13 zeigt eine räumliche Darstellung eines Verriegelungselements 302 gemäß einem Ausführungsbeispiel der vorliegenden Erfindung. Das Verriegelungselement 302 ist hier einzeln dargestellt. Das Verriegelungselement 302 entspricht im Wesentlichen dem in Fig. 9 dargestellten Verriegelungselement. Wie in Fig. 9 weist das Verriegelungselement 302 einen Einsatz 900 auf, der die zweite Komponente der Verzahnung aufweist. Der Einsatz 900 ist in einem Kunststoffteil eingefasst, der einen Verriegelungsmechanismus 1300 des Verriegelungselements 302 aufweist. Die zweite Komponente der Verzahnung steht über eine Ebene der Gleitfläche 608 um eine Zahntiefe über. An einem der Gleitfläche zugewandten Ende läuft die Verzahnung in Einlaufschrägen bzw. Anlaufschrägen aus, um ein Einfädeln der zweiten Komponente in die erste Komponente zu vereinfachen. Jeder Schenkel des Verriegelungselements 302 weist auf einer Außenseite eine Tasche 1302 auf, in der eine biegsame Zunge 1304 angeordnet ist. Jede Zunge 1304 weist eine der Rastnasen 600 auf. Die Zungen 1304 sind als mechanische Federn ausgebildet und sind dazu ausgebildet, einer Verformung eine definierte Gegenkraft entgegenzubringen.

Fig. 14 zeigt eine Ansicht eines Verriegelungselements 302 gemäß einem Ausführungsbeispiel der vorliegenden Erfindung. Das Verriegelungselement 302 entspricht im Wesentlichen dem Verriegelungselement in Fig. 13. Hier ist die U-Form des Verriegelungselements 302 mit seinen zwei Schenkeln besonders gut erkennbar. Jeder Schenkel weist auf seiner Innenseite je eine Gleitfläche 608 und einen Teil der zweiten Komponente der Verzahnung auf. Dabei sind die Gleitflächen 608 jeweils mit einer Fase ausgeführt, um das Einführen des Verriegelungselements 302 in die Aussparung der Einstelleinheit zu erleichtern. Auf seiner Außenseite weist der Schenkel den Verriegelungsmechanismus 1300 mit der Zunge und der Rastnase 600 auf. Die Rastnasen 600 stehen jeweils über die Ebene der Außenseite über.

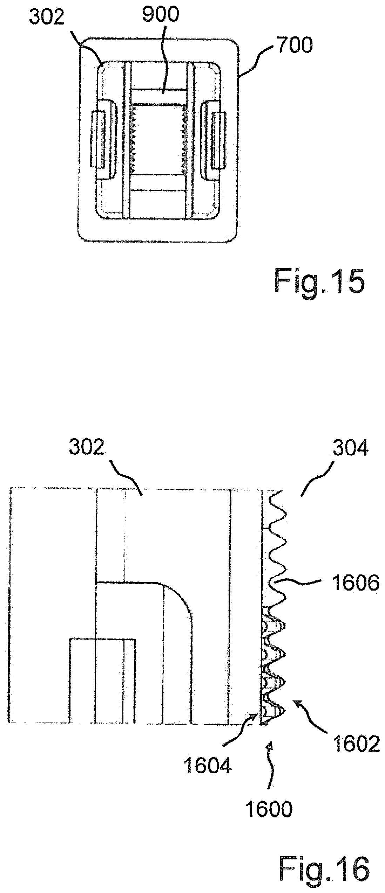

Fig. 15 zeigt eine Draufsicht auf ein Verriegelungselement 302 gemäß einem Ausführungsbeispiel der vorliegenden Erfindung. Das Verriegelungselement 302 entspricht im Wesentlichen dem Verriegelungselement in Fig. 13. Hier ist das Verriegelungselement 302 aus Richtung der Schenkel dargestellt. In dem hier dargestellten Ausführungsbeispiel ist der Einsatz 900 zentral in dem Verriegelungselement angeordnet. Der Verriegelungsmechanismus 1300 ist mittig an den Schenkeln angeordnet. Der Flansch 700 ist umlaufend um das Verriegelungselement ausgebildet. Der Flansch 700 steht umlaufend über die in die Aussparung der Einstelleinrichtung einführbaren Schenkel über.

In einem Ausführungsbeispiel weist der Einsatz 900 eine Länge von 9 mm auf.

Fig. 16 zeigt eine Detaildarstellung einer formschlüssigen Verbindung 1600 gemäß einem Ausführungsbeispiel der vorliegenden Erfindung. Die formschlüssige Verbindung 1600 ist eine Verzahnung 1600. Es ist ein Ausschnitt aus der Darstellung in Fig. 15 gezeigt. Zusätzlich ist das Formstück 304 mit der ersten Komponente 1602 der Verzahnung 1600 dargestellt. Das Verriegelungselement 302 weist die zweite Komponente 1604 der Verzahnung 1600 auf. Die Komponenten 1602, 1604 weisen jeweils eine Reihe von aufeinanderfolgenden Zähnen 1606 auf.

In einem Ausführungsbeispiel weisen die Zähne 1606 der ersten Komponente 1602 die gleiche Form auf, wie die Zähne der zweiten Komponente 1604. An Zahnfuß und Zahnkopf weisen die Zähne jeweils eine Rundung auf. Die Zahnflanken sind geradlinig ausgeformt. Am Zahnfuß ist die Rundung kleiner als am Zahnkopf. Dadurch weist die Verzahnung ein Kopfspiel und ein Fußspiel auf.

In einem Ausführungsbeispiel weisen die Zahnflanken einen Flankenwinkel bzw. Zahnwinkel von 60° auf.

In einem Ausführungsbeispiel weist die Verzahnung 1600 eine Zahnteilung von 0,5 mm auf.

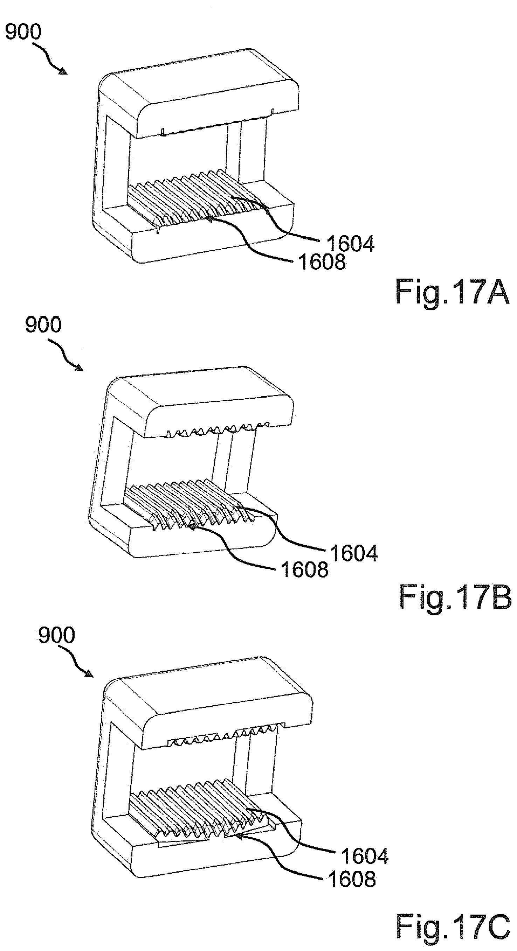

Fig. 17A bis Fig. 17C zeigen jeweils einen Einsatz 900 für ein Verriegelungselement 302 gemäß einem Ausführungsbeispiel der vorliegenden Erfindung. Die Einsätze 900 sind jeweils U-förmig ausgebildet, wobei die zweite Komponente 1604 der Verzahnung 1600 an den gegenüberliegenden Innenseiten der Schenkel des U-förmigen Einsatzes 900 angeordnet sind. Die zweite Komponente 1604 weist eine Reihe von aufeinanderfolgenden Zähnen 1606 auf, die sich von dem Grund der U-Form bis zu dem freien Ende des Schenkels erstrecken, wobei die Zahnenden in dem Bereich des freien Endes des Schenkels eine Einführschräge 1608 ausformen, über welche die erste Komponente der Verzahnung 1600 in Eingriff mit der zweiten Komponente 1604 gelangt. Die jeweils dargestellten Einsätze 900 sind mit Blick auf die Einführschräge 1608 zueinander unterschiedlich, wobei jede dargestellte Ausgestaltung der Einführschräge 1608 das Einführen des Verriegelungselements 302 in die Aussparung der Einstelleinheit erleichtert. Die Einführschräge 1608 des in Fig. 17A gezeigten Einsatzes 900 wird durch einen abnehmenden Verlauf einer Zahnkopfhöhe der jeweiligen Zahnköpfe in Richtung des freien Schenkelendes derart ausgeformt, dass die Zahnköpfe der zweiten Komponente 1604 an dem freien Schenkelende annähernd auf einer Ebene mit den Zahnfüssen der zweiten Komponente 1604 abschließen. Die Einführschräge 1608 des in Fig. 17B gezeigten Einsatzes 900 wird durch einen zueinander unterschiedlichen abnehmenden Verlauf einer Zahnkopfhöhe zweier benachbarter Zahnköpfe in Richtung des freien Schenkelendes ausgeformt. Dabei endet jeder zweite Zahnkopf in einer gemeinsamen Ebene, die näher an der die jeweiligen benachbarten Zahnfüsse aufweisenden gemeinsamen Ebene liegt als die gemeinsame Ebene, in welcher die anderen Zahnköpfe enden. Die Einführschräge 1608 des in Fig. 17C gezeigten Einsatzes 900 wird durch einen abnehmenden Verlauf einer Zahnkopfhöhe der Zahnköpfe in Richtung des freien Schenkelendes ausgeformt, wobei die Zahnköpfe in einer gemeinsamen Ebene enden, die beabstandet zu der die Zahnfüsse aufweisenden gemeinsamen Ebene ist. Ferner weisen die jeweiligen Zähne 1606 der zweiten Komponente 1604 ausgehend von zwei mittigen zueinander benachbarten Zähnen 1606, die mit dem freien Schenkelende abschließen, in Richtung zu den jeweils außenliegenden Zähnen 1606 eine von Zahn zu Zahn vom Grund der U-Form ausgehende geringere Länge auf. Dadurch bildet die Einführschräge 1608 in dem Bereich des freien Schenkelendes eine V-Form mit einer in Einführrichtung des Einsatzes 900 weisenden Spitze aus.

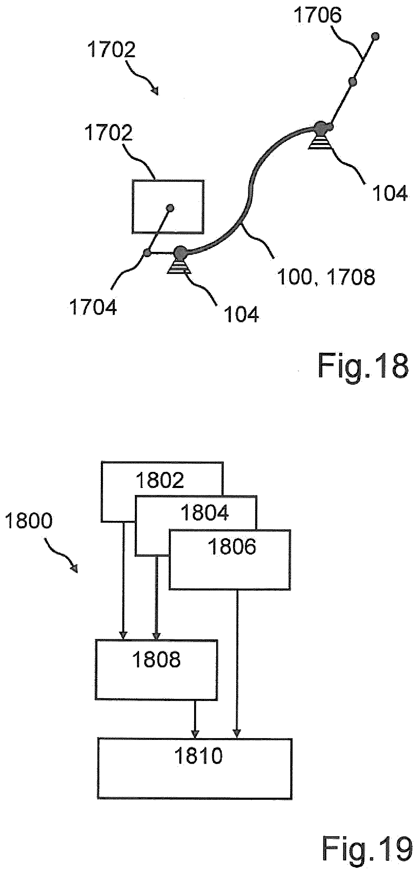

Fig. 18 zeigt ein Blockschaltbild eines Getriebesystems 1700 gemäß einem Ausführungsbeispiel der vorliegenden Erfindung. Das Getriebesystem 1700 weist ein Getriebe 1702 mit einem Anlenkpunkt 1704, einen Wählhebel 1706 und einen Seilzug 100 gemäß dem hier vorgestellten Ansatz auf. Dabei verbindet der Seilzug 100 den Wählhebel 1706 mit dem Anlenkpunkt 1704. Der Seilzug 100 ist dazu ausgebildet, eine Zugkraft von dem Wählhebel 1706 auf den Anlenkpunkt 1704 zu übertragen. Der Seilzug 100 ist flexibel und um Kurven verlegbar. Zwei an entgegengesetzten Enden einer Hülle 1708 angeordnete Widerlager 104 stützen die Gegenkraft zur Zugkraft ab.

Fig. 19 zeigt ein Ablaufdiagramm eines Verfahrens 1800 zum Herstellen eines Seilzugs gemäß einem Ausführungsbeispiel der vorliegenden Erfindung. Das Verfahren 1800 weist drei Schritte 1802, 1804, 1806 des Bereitstellens, einen Schritt 1808 des Anordnens und einen Schritt 1810 des Einpressens auf. Im Schritt 1802 des Bereitstellens wird eine mit einer Drahtseele des Seilzugs gekoppelte Zugstange mit einem Formstück bereitgestellt. Das Formstück weist eine erste Komponente einer Verzahnung auf. Die Zugstange ist in einem mit einer Hülle des Seilzugs verbundenen Widerlager axial gelagert. Im Schritt 1804 des Bereitstellens wird eine Einstelleinheit zum Anpassen einer Länge des Seilzugs zwischen dem Widerlager und dem Anlenkpunkt bereitgestellt. Die Einstelleinheit weist eine Führung zum Aufnehmen des Formstücks und eine Aussparung zum Aufnehmen eines Verriegelungselements auf. Im Schritt 1806 des Bereitstellens wird das Verriegelungselement zum Fixieren des Formstücks in der Einstelleinheit bereitgestellt. Das Verriegelungselement weist eine zweite Komponente der Verzahnung auf, die dazu ausgebildet ist, in die erste Komponente formschlüssig einzugreifen und die axiale Bewegung des Formstücks in der Führung zu unterbinden. Im Schritt 1808 des Anordnens wird das Formstück in der Führung der Einstelleinheit angeordnet. Im Schritt 1810 des Einpressens wird das Verriegelungselement in die Aussparung eingepresst, bis das Verriegelungselement in einer Einstellposition angeordnet ist, in der das Formstück verlustsicher mit der Einstelleinrichtung verbunden ist.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Seilzug
- 102: Längeneinstelleinrichtung
- 104: Widerlager
- 106: Hülse
- 108: Zugstange
- 110: Endstück
- 112: Schraubverbindung
- 114: Kugelbuchse
- 200: Ende
- 202: Langloch
- 300: Einstelleinheit
- 302: Verriegelungselement
- 304: Formstück
- 400: Verdickung
- 600: Rastnase
- 602: Körperkante
- 604: Aussparung
- 606: Tasche
- 608: Gleitfläche
- 700: Flansch
- 900: Einsatz
- 1000: Einstellbereich
- 1300: Verriegelungsmechanismus
- 1302: Tasche
- 1304: Zunge
- 1600: Verzahnung
- 1602: erste Komponente der Verzahnung
- 1604: zweite Komponente der Verzahnung
- 1606: Zahn
- 1608: Einführschräge
- 1700: Getriebesystem
- 1702: Getriebe
- 1704: Anlenkpunkt
- 1706: Wählhebel
- 1708: Hülle
- 1800: Verfahren zum Herstellen eins Seilzugs
- 1802: Bereitstellen eines Formstücks
- 1804: Bereitstellen einer Einstelleinheit
- 1806: Bereitstellen eines Verriegelungselements
- 1808: Anordnen des Formstücks
- 1810: Einpressen des Verriegelungselements

## Patentansprüche

1. Seilzug (100) zum Übertragen einer Zug- und/oder Druckkraft auf einen Anlenkpunkt (1704) für ein Getriebesystem für ein Fahrzeug, wobei der Seilzug (100) die folgenden Merkmale aufweist:
ein Widerlager (104) zum Einleiten einer, der Zug- und/oder Druckkraft entgegengerichteten Gegenkraft in eine Hülle (1708) des Seilzugs (100);
eine Zugstange (108), die in dem Widerlager (104) axial gelagert ist und mit einer Drahtseele des Seilzugs (100) gekoppelt ist, wobei die Zugstange (108) an einem aus dem Widerlager (104) vorstehenden Ende ein Formstück (304) mit einer ersten Komponente (1602) einer Verzahnung (1600) aufweist;
eine Einstelleinheit (300) zum Anpassen einer Länge des Seilzugs (100) zwischen dem Widerlager (104) und dem Anlenkpunkt (1704), wobei die Einstelleinheit (300) eine Führung für das Formstück (304) aufweist, wobei das Formstück (304) in der Führung axial beweglich und quer dazu geführt angeordnet ist; und
ein Verriegelungselement (302) zum Fixieren des Formstücks (304) in der Einstelleinheit (300), wobei das Verriegelungselement (302) in einer quer zu der Führung ausgerichteten Aussparung (604) in der Einstelleinheit (300) angeordnet ist und zwischen einer Verriegelungsposition und einer Einstellposition beweglich ist, wobei das Verriegelungselement (302) eine zweite Komponente (1604) der Verzahnung (1600) aufweist, die dazu ausgebildet ist, in der Verriegelungsposition in die erste Komponente (1602) formschlüssig einzugreifen und die axiale Bewegung des Formstücks (304) in der Führung zu unterbinden, **dadurch gekennzeichnet, dass** das Verriegelungselement (302) einen Einsatz (900) aus einem Material aufweist, das eine höhere mechanische Belastbarkeit als ein Material des Verriegelungselements (302) aufweist, wobei an dem Einsatz (900) zumindest ein Teil der zweiten Komponente (1604) der Verzahnung (1600) ausgebildet ist.

2. Seilzug (100) gemäß Anspruch 1, **dadurch gekennzeichnet, dass** die Verzahnung (1600) eine Zahnteilung kleiner als einen Millimeter aufweist.

3. Seilzug (100) gemäß Anspruch 1 oder 2, **dadurch gekennzeichnet, dass** die Verzahnung (1600) eine Zahnteilung kleiner als einen dreiviertel Millimeter aufweist.

4. Seilzug (100) gemäß einem der vorhergehenden Ansprüche, **dadurch gekennzeichnet, dass** die Verzahnung (1600) eine Zahnteilung kleiner als einen halben Millimeter aufweist.

5. Seilzug (100) gemäß Anspruch 1, **dadurch gekennzeichnet, dass** das Material des Einsatzes (900) ein metallischer Werkstoff und das Material des Verriegelungselements (302) ein Kunststoffwerkstoff ist.

6. Seilzug (100) gemäß einem der vorhergehenden Ansprüche, **dadurch gekennzeichnet, dass** das Formstück (304) einen viereckigen Querschnitt aufweist, wobei die erste Komponente (1602) der Verzahnung (1600) auf zwei gegenüberliegenden Seitenflächen des Formstücks (304) angeordnet ist.

7. Seilzug (100) gemäß einem der vorhergehenden Ansprüche, **dadurch gekennzeichnet, dass** das Formstück (304) an einem, der Zugstange (108) gegenüberliegenden Ende eine Verdickung (400) aufweist, welche die erste Komponente (1602) der Verzahnung (1600) überragt, wobei die Verdickung (400) an Seitenwänden der Führung anliegt und die erste Komponente (1602) einen Abstand zu den Seitenwänden aufweist.

8. Seilzug (100) gemäß einem der vorhergehenden Ansprüche, **dadurch gekennzeichnet, dass** das Verriegelungselement (302) zumindest eine Rastnase (600) aufweist, die dazu ausgebildet ist, in der Einstellposition an einer ersten Körperkante (606) der Einstelleinheit (300) formschlüssig einzugreifen, um das Verriegelungselement (302) gegen ein Entfernen aus der Aussparung (604) zu sichern, wobei die Rastnase (600) eine Schräge aufweist, durch die die Rastnase (600) beim Bewegen in die Verriegelungsposition in die Aussparung (604) gedrückt wird, wobei die Rastnase (600) dazu ausgebildet ist, in der Verriegelungsposition an einer zweiten Körperkante (602) der Einstelleinheit (300) formschlüssig einzugreifen, um das Verriegelungselement (302) gegen ein Entfernen aus der Verriegelungsposition zu sichern.

9. Seilzug (100) gemäß einem der vorhergehenden Ansprüche, **dadurch gekennzeichnet, dass** das Verriegelungselement (302) eine Gleitfläche (608) für die erste Komponente (1602) der Verzahnung (1600) aufweist, wobei die Gleitfläche (608) in der Einstellposition benachbart zu der ersten Komponente (1602) angeordnet ist und in der Verriegelungsposition versetzt zu der Verzahnung (1600) angeordnet ist.

10. Seilzug (100) gemäß einem der vorhergehenden Ansprüche, **dadurch gekennzeichnet, dass** die Verzahnung (1600) mit Einführschrägen ausgebildet ist.

11. Getriebesystem (1700) mit einem Getriebe (1702) mit einem Anlenkpunkt (1704) und mit einem Wählhebel (1706) für ein Fahrzeug, **dadurch gekennzeichnet, dass** das Getriebesystem einen Seilzug (100) gemäß einem der vorhergehenden Ansprüche aufweist, wobei der Seilzug (100) den Wählhebel (1706) mit dem Anlenkpunkt (1704) verbindet und ausgebildet ist, eine Zug- und/oder Druckkraft von dem Wählhebel (1706) auf den Anlenkpunkt (1704) zu übertragen, wobei zwei an entgegengesetzten Enden der Hülle (1708) des Seilzugs (100) angeordnete Widerlager (104) ausgebildet sind, um die Gegenkraft zur Zug- und/oder Druckkraft abstützen.

12. Verfahren (1800) zum Herstellen eines Seilzugs (100) für ein Getriebesystem für ein Fahrzeug, wobei das Verfahren (1800) die folgenden Schritte umfasst:
Bereitstellen (1802) einer mit einer Drahtseele des Seilzugs (100) gekoppelten Zugstange (108) mit einem Formstück (304), das eine erste Komponente (1602) einer Verzahnung (1600) aufweist, wobei die Zugstange (108) in einem mit einer Hülle (1708) des Seilzugs (100) verbundenen Widerlager (104) axial gelagert ist;
Bereitstellen (1804) einer Einstelleinheit (300) zum Anpassen einer Länge des Seilzugs (100) zwischen dem Widerlager (104) und dem Anlenkpunkt (1704), wobei die Einstelleinheit (300) eine Führung zum Aufnehmen des Formstücks (304) und eine Aussparung (604) zum Aufnehmen eines Verriegelungselements (302) aufweist;
Bereitstellen (1806) des Verriegelungselements (302) zum Fixieren des Formstücks (304) in der Einstelleinheit (300), wobei das Verriegelungselement (302) eine zweite Komponente (1604) der Verzahnung (1600) aufweist, die dazu ausgebildet ist, in die erste Komponente (1602) formschlüssig einzugreifen und die axiale Bewegung des Formstücks (302) in der Führung zu unterbinden, und wobei das Verriegelungselement (302) einen Einsatz (900) aus einem Material aufweist, das eine höhere mechanische Belastbarkeit als ein Material des Verriegelungselements (302) aufweist, wobei an dem Einsatz (900) zumindest ein Teil der zweiten Komponente (1604) der Verzahnung (1600) ausgebildet ist;
Anordnen (1808) des Formstücks (304) in der Führung der Einstelleinheit (300); und
Einpressen (1810) des Verriegelungselements (302) in die Aussparung (604), bis das Verriegelungselement (302) in einer Einstellposition angeordnet ist, in der das Formstück (304) verlustsicher mit der Einstelleinrichtung (300) verbunden ist.

## Claims

1. Control cable (100) for transmitting a pulling and/or pushing force to an articulation point (1704) for a transmission system for a vehicle, wherein the control cable (100) has the following features:
a counterbearing (104) for the introduction of an opposing force, directed opposite to the pulling and/or pushing force, into a sheath (1708) of the control cable (100);
a pull rod (108) which is mounted axially in the counterbearing (104) and which is coupled to a wire core of the control cable (100), wherein the pull rod (108) has, on an end protruding from the counterbearing (104), a moulded piece (304) with a first component (1602) of a toothing (1600);
an adjustment unit (300) for adaptation of a length of the control cable (100) between the counterbearing (104) and the articulation point (1704), wherein the adjustment unit (300) has a guide for the moulded piece (304), wherein the moulded piece (304) is arranged in the guide so as to be movable axially and so as to be guided transversely with respect thereto; and
a locking element (302) for the fixing of the moulded piece (304) in the adjustment unit (300), wherein the locking element (302) is arranged in a recess (604), which is oriented transversely with respect to the guide, in the adjustment unit (300) and is movable between a locking position and an adjustment position, wherein the locking element (302) has a second component (1604) of the toothing (1600), which second component is designed to, in the locking position, engage in positively locking fashion into the first component (1602) and prevent the axial movement of the moulded piece (304) in the guide, **characterized in that** the locking element (302) has an insert (900) composed of a material which has a greater mechanical load capacity than a material of the locking element (302), wherein at least a part of the second component (1604) of the toothing (1600) is formed on the insert (900) .

2. Control cable (100) according to Claim 1, **characterized in that** the toothing (1600) has a tooth pitch of less than one millimetre.

3. Control cable (100) according to Claim 1 or 2, **characterized in that** the toothing (1600) has a tooth pitch of less than three quarters of one millimetre.

4. Control cable (100) according to one of the preceding claims, **characterized in that** the toothing (1600) has a tooth pitch of less than half of one millimetre.

5. Control cable (100) according to Claim 1, **characterized in that** the material of the insert (900) is a metallic material, and the material of the locking element (302) is a plastics material.

6. Control cable (100) according to one of the preceding claims, **characterized in that** the moulded piece (304) has a tetragonal cross section, wherein the first component (1602) of the toothing (1600) is arranged on two opposite side surfaces of the moulded piece (304).

7. Control cable (100) according to one of the preceding claims, **characterized in that** the moulded piece (304) has, on an end situated opposite the pull rod (108), a thickened portion (400) which projects beyond the first component (1602) of the toothing (1600), wherein the thickened portion (400) bears against side walls of the guide and the first component (1602) has a spacing to the side walls.

8. Control cable (100) according to one of the preceding claims, **characterized in that** the locking element (302) has at least one detent lug (600) which is designed to, in the adjustment position, engage in positively locking fashion on a first body edge (606) of the adjustment unit (300) in order to secure the locking element (302) against removal from the recess (604), wherein the detent lug (600) has a bevel by means of which the detent lug (600) is pushed into the recess (604) during the movement into the locking position, wherein the detent lug (600) is designed to, in the locking position, engage in positively locking fashion on a second body edge (602) of the adjustment unit (300) in order to secure the locking element (302) against removal from the locking position.

9. Control cable (100) according to one of the preceding claims, **characterized in that** the locking element (302) has a sliding surface (608) for the first component (1602) of the toothing (1600), wherein the sliding surface (608), in the adjustment position, is arranged adjacent to the first component (1602) and, in the locking position, is arranged offset with respect to the toothing (1600).

10. Control cable (100) according to one of the preceding claims, **characterized in that** the toothing (1600) is formed with insertion bevels.

11. Transmission system (1700) having a transmission (1702) with an articulation point (1704) and with a selector lever (1706) for a vehicle, **characterized in that** the transmission system has a control cable (100) according to one of the preceding claims, wherein the control cable (100) connects the selector lever (1706) to the articulation point (1704) and is designed to transmit a pulling and/or pushing force from the selector lever (1706) to the articulation point (1704), wherein two counterbearings (104) arranged on opposite ends of the sheath (1708) of the control cable (100) are designed to support the opposing force in relation to the pulling and/or pushing force.

12. Method (1800) for producing a control cable (100) for a transmission system for a vehicle, wherein the method (1800) comprises the following steps:
providing (1802) a pull rod (108) which is coupled to a wire core of the control cable (100) and which has a moulded piece (304) which has a first component (1602) of a toothing (1600), wherein the pull rod (108) is mounted axially in a counterbearing (104) connected to a sheath (1708) of the control cable (100);
providing (1804) an adjustment unit (300) for adaptation of a length of the control cable (100) between the counterbearing (104) and the articulation point (1704), wherein the adjustment unit (300) has a guide for receiving the moulded piece (304) and a recess (604) for receiving a locking element (302);
providing (1806) the locking element (302) for the fixing of the moulded piece (304) in the adjustment unit (300), wherein the locking element (302) has a second component (1604) of the toothing (1600), which second component is designed to engage in positively locking fashion into the first component (1602) and prevent the axial movement of the moulded piece (304) in the guide, and wherein the locking element (302) has an insert (900) composed of a material which has a greater mechanical load capacity than a material of the locking element (302), wherein at least a part of the second component (1604) of the toothing (1600) is formed on the insert (900);
arranging (1808) the moulded piece (304) in the guide of the adjustment unit (300); and
pressing (1810) the locking element (302) into the recess (604), until the locking element (302) is arranged in an adjustment position in which the moulded piece (304) is captively connected to the adjustment device (300).

## Revendications

1. Commande par câble (100) pour transférer une force de traction et/ou de compression à un point d'articulation (1704) pour un système de transmission d'un véhicule, la commande par câble (100) présentant les caractéristiques suivantes :
une butée (104) pour introduire une force opposée orientée à l'opposé de la force de traction et/ou de compression dans une gaine (1708) de la commande par câble (100) ;
une tige de traction (108) qui est supportée axialement dans la butée (104) et est accouplée à une âme en fil métallique de la commande par câble (100), la tige de traction (108) présentant, au niveau d'une extrémité faisant saillie depuis la butée (104), une pièce façonnée (304) avec un premier composant (1602) d'une denture (1600) ;
une unité de réglage (300) pour adapter une longueur de la commande par câble (100) entre la butée (104) et le point d'articulation (1704), l'unité de réglage (300) présentant un guide pour la pièce façonnée (304), la pièce façonnée (304) étant disposée de manière déplaçable axialement dans le guide et de manière guidée transversalement par rapport à celui-ci ; et
un élément de verrouillage (302) pour fixer la pièce façonnée (304) dans l'unité de réglage (300), l'élément de verrouillage (302) étant disposé dans un évidement (604) orienté transversalement par rapport au guide dans l'unité de réglage (300) et pouvant être déplacé entre une position de verrouillage et une position de réglage, l'élément de verrouillage (302) présentant un deuxième composant (1604) de la denture (1600) qui est réalisé de manière à venir en prise par engagement par correspondance de formes dans le premier composant (1602) dans la position de verrouillage, et pour supprimer le déplacement axial de la pièce façonnée (304) dans le guide, **caractérisée en ce que** l'élément de verrouillage (302) présente un insert (900) en un matériau qui présente une plus grande capacité de charge mécanique qu'un matériau de l'élément de verrouillage (302), au moins une partie du deuxième composant (1604) de la denture (1600) étant réalisée sur l'insert (900).

2. Commande par câble (100) selon la revendication 1, **caractérisée en ce que** la denture (1600) présente un pas de denture inférieur à 1 mm.

3. Commande par câble (100) selon la revendication 1 ou 2, **caractérisée en ce que** la denture (1600) présente un pas de denture inférieur à trois quarts de millimètre.

4. Commande par câble (100) selon l'une quelconque des revendications précédentes, **caractérisée en ce que** la denture (1600) présente un pas de denture inférieur à un demi-millimètre.

5. Commande par câble (100) selon la revendication 1, **caractérisée en ce que** le matériau de l'insert (900) est un matériau métallique et le matériau de l'élément de verrouillage (302) est un matériau en plastique.

6. Commande par câble (100) selon l'une quelconque des revendications précédentes, **caractérisée en ce que** la pièce façonnée (304) présente une section transversale carrée, le premier composant (1602) de la denture (1600) étant disposé sur deux surfaces latérales opposées de la pièce façonnée (304) .

7. Commande par câble (100) selon l'une quelconque des revendications précédentes, **caractérisée en ce que** la pièce façonnée (304) présente, au niveau d'une extrémité opposée à la tige de traction (108), un épaississement (400) qui fait saillie au-delà du premier composant (1602) de la denture (1600), l'épaississement (400) s'appliquant contre des parois latérales du guide et le premier composant (1602) présentant un espacement par rapport aux parois latérales.

8. Commande par câble (100) selon l'une quelconque des revendications précédentes, **caractérisée en ce que** l'élément de verrouillage (302) présente au moins un ergot d'encliquetage (600) qui est réalisé de manière à venir en prise par engagement par correspondance de formes dans la position de réglage avec un première arête de corps (606) de l'unité de réglage (300), afin de fixer l'élément de verrouillage (302) pour l'empêcher de sortir de l'évidement (604), l'ergot d'encliquetage (600) présentant un biseau par le biais duquel l'ergot d'encliquetage (600), lors du déplacement dans la position de verrouillage, est pressé dans l'évidement (604), l'ergot d'encliquetage (600) étant réalisé de manière à venir en prise par engagement par correspondance de formes dans la position de verrouillage avec une deuxième arête de corps (602) de l'unité de réglage (300), afin de fixer l'élément de verrouillage (302) pour l'empêcher de sortir de la position de verrouillage.

9. Commande par câble (100) selon l'une quelconque des revendications précédentes, **caractérisée en ce que** l'élément de verrouillage (302) présente une surface de glissement (608) pour le premier composant (1602) de la denture (1600), la surface de glissement (608) étant disposée, dans la position de réglage, à côté du premier composant (1602), et étant disposée, dans la position de verrouillage, de manière décalée par rapport à la denture (1600).

10. Commande par câble (100) selon l'une quelconque des revendications précédentes, **caractérisée en ce que** la denture (1600) est réalisée avec des biseaux d'insertion.

11. Système de transmission (1700) comprenant une transmission (1702) avec un point d'articulation (1704) et un levier de sélection (1706) pour un véhicule, **caractérisé en ce que** le système de transmission présente une commande par câble (100) selon l'une quelconque des revendications précédentes, la commande par câble (100) reliant le levier de sélection (1706) au point d'articulation (1704) et étant réalisée de manière à transmettre une force de traction et/ou de compression depuis le levier de sélection (1706) au point d'articulation (1704), deux butées (104) disposées à l'opposé de la gaine (1708) de la commande par câble (100) étant réalisées pour supporter la force opposée à la force de traction et/ou de compression.

12. Procédé (1800) de fabrication d'une commande par câble (100) pour un système de transmission pour un véhicule, le procédé (1800) comprenant les étapes suivantes :
fourniture (1802) d'une tige de traction (108) accouplée à une âme en fil métallique de la commande par câble (100) avec une pièce façonnée (304), qui présente un premier composant (1602) d'une denture (1600), la tige de traction (108) étant supportée axialement dans une butée (104) connectée à une gaine (1708) de la commande par câble (100) ;
fourniture (1804) d'une unité de réglage (300) pour adapter une longueur de la commande par câble (100) entre la butée (104) et le point d'articulation (1704), l'unité de réglage (300) présentant un guide pour recevoir la pièce façonnée (304) et un évidement (604) pour recevoir un élément de verrouillage (302) ;
fourniture (1806) de l'élément de verrouillage (302) pour fixer la pièce façonnée (304) dans l'unité de réglage (300), l'élément de verrouillage (302) présentant un deuxième composant (1604) de la denture (1600), qui est réalisé de manière à venir en prise par engagement par correspondance de formes dans le premier composant (1602) et pour supprimer le déplacement axial de la pièce façonnée (302) dans le guide, et l'élément de verrouillage (302) présentant un insert (900) en un matériau qui présente une plus grande capacité de charge mécanique qu'un matériau de l'élément de verrouillage (302),
au moins une partie du deuxième composant (1604) de la denture (1600) étant réalisée au niveau de l'insert (900) ;
agencement (1808) de la pièce façonnée (304) dans le guide de l'unité de réglage (300) ; et
enfoncement (1810) de l'élément de verrouillage (302) dans l'évidement (604), jusqu'à ce que l'élément de verrouillage (302) soit disposé dans une position de réglage dans laquelle la pièce façonnée (304) est connectée de manière imperdable au dispositif de réglage (300).
